# EUROPÄISCHE PATENTANMELDUNG

(11) **EP 0 987 398 A1**
(43) Veröffentlichungstag der Anmeldung: **22.03.2000**
(21) Anmeldenummer: 99117439.2
(22) Anmeldetag: 08.09.1999
(51) Int. Cl.: E21B 10/58

(54) **Bohrwerkzeug**

(30) Priorität: 09.09.1998 DE 29816202 U
(71) Anmelder: PLICA WERKZEUGFABRIK AG, 8753 Mollis (CH)
(72) Erfinder: Runge, Erich, 74653 Künzelsau (DE)
(74) Vertreter: Sties, Jochen, Dipl.-Ing.

(57) **Zusammenfassung**

Ein Bohrwerkzeug mit einem Schaft (10) und einem Bohrkopf (12, 14), an dem eine Hartmetallschneide (16) angeordnet ist, ist dadurch gekennzeichnet, daß der Bohrkopf aus einem Hartmetallteil (14), welches das vom Schaft abgewandte Ende des Bohrkopfes bildet und an der die Hartmetallschneide (16) geformt ist, und aus einem Abstützabschnitt (12) für das Hartmetallteil (14) besteht, der mit dem Schaft (10) verbunden ist, wobei das Hartmetallteil (14) mit dem Abstützabschnitt (12) verlötet ist.

## Beschreibung

Die Erfindung betrifft ein Bohrwerkzeug mit einem Schaft und einem Bohrkopf, an dem eine Hartmetallschneide angeordnet ist.

Bohrwerkzeuge dieses Typs sind in den verschiedensten Ausgestaltungen bekannt. Die Hartmetallschneide kann an einer Schneidplatte aus Hartmetall ausgebildet sein, die in eine Aufnahmenut im Bohrkopf eingesetzt und dort verlötet ist. Die Hartmetallschneide kann auch an einem Hartmetall-Bohrkopf ausgebildet sein, der mit dem Schaft des Bohrwerkzeugs verbunden ist. Der Vorteil bei dieser Gestaltung besteht darin, daß der gesamte Bohrkopf aus Hartmetall besteht, so daß sich eine besonders hohe Verschleißfestigkeit ergibt. Der Nachteil bei dieser Gestaltung besteht darin, daß der Bohrkopf nicht mehr mit dem Schaft verlötet werden kann, da auf diese Weise die erforderliche Festigkeit nicht erzielt werden kann. Statt dessen muß der Bohrkopf mit dem Schaft verschweißt werden, was es notwendig macht, eine ganz bestimmte Materialzusammensetzung des Bohrkopfes wenigstens auf der dem Schaft zugewandten Seite zu gewährleisten, damit der Bohrkopf überhaupt mit dem Schaft verschweißt werden kann. Hinzu kommt, daß die gewünschte Zentrierung des Bohrkopfes relativ zum Schaft nur mit sehr hohem Aufwand erzielt werden kann.

Die Aufgabe der Erfindung besteht darin, ein Bohrwerkzeug zu schaffen, dessen Bohrkopf extrem verschleißfest ist, während er gleichzeitig mit dem Schaft verlötet werden kann, ohne daß die Gefahr einer Zerstörung des Bohrwerkzeugs besteht.

Diese Aufgabe wird bei einem Bohrwerkzeug der eingangs genannten Art dadurch gelöst, daß der Bohrkopf aus einem Hartmetallteil, welches das vom Schaft abgewandte Ende des Bohrkopfes bildet und an der die Hartmetallschneide geformt ist, und aus einem Abstützabschnitt für das Hartmetallteil besteht, der mit dem Schaft verbunden ist, wobei das Hartmetallteil mit dem Abstützabschnitt verlötet ist. Der Bohrkopf besteht also aus zwei Teilen, dem Hartmetallteil und dem Abstützabschnitt. Das Hartmetallteil bildet nicht lediglich eine eingesetzte Schneidplatte, wie dies aus dem Stand der Technik bekannt ist, sondern den gesamten vorderen Teil des Bohrkopfes. An das Hartmetallteil schließt sich dann der Abstützabschnitt an, mit dem das Hartmetallteil verlötet ist. Im Bereich des Übergangs vom Hartmetallteil zum Abstützabschnitt weisen beide zumindest annähernd denselben Querschnitt auf; der Abstützabschnitt und der Schaft, die beide aus einem im Vergleich zum Hartmetallteil weicheren und damit verschleißanfälligeren Werkstoff bestehen, sind also mittels des sich über den gesamten Querschnitt des Bohrkopfes erstreckenden Hartmetallteils vor Verschleiß geschützt. Der Abstützabschnitt ist mit einer Oberfläche versehen, die zusammen mit der komplementären Oberfläche des Hartmetallteils zum einen eine formschlüssige Verbindung zwischen Abstützabschnitt und Hartmetallteil bildet und zum anderen einen großen Flächenbereich zum Verlöten bereitstellt.

Vorteilhafte Ausgestaltungen der Erfindung ergeben sich aus den Unteransprüchen.

Die Erfindung wird nachfolgend unter Bezugnahme auf verschiedene Ausführungsformen beschrieben, die in den beigefügten Zeichnungen dargestellt sind. In diesen zeigen:
- die Figuren 1a bis 1c in einer ersten Seitenansicht, einer zweiten Seitenansicht und einer Draufsicht ein erfindungsgemäßes Bohrwerkzeug gemäß einer ersten Ausführungsform;
- die Figuren 2a bis 2c in Ansichten entsprechend denjenigen von Figur 1 ein erfindungsgemäßes Bohrwerkzeug gemäß einer zweiten Ausführungsform;
- die Figuren 3a bis 3d in einer ersten Seitenansicht, einer zweiten Seitenansicht, einer Draufsicht und einer Schnittansicht ein erfindungsgemäßes Bohrwerkzeug gemäß einer dritten Ausführungsform der Erfindung;
- die Figuren 4a bis 4c in Ansichten entsprechend denjenigen von Figur 1 ein erfindungsgemäßes Bohrwerkzeug gemäß einer vierten Ausführungsform der Erfindung;
- die Figuren 5a bis 5c in Ansichten entsprechend denjenigen von Figur 1 ein erfindungsgemäßes Bohrwerkzeug gemäß einer fünften Ausführungsform der Erfindung; und
- die Figuren 6a bis 6e in einer ersten Seitenansicht, einer zweiten Seitenansicht, einer Draufsicht sowie zwei Schnittansichten ein erfindungsgemäßes Bohrwerkzeug gemäß einer sechsten Ausführungsform der Erfindung.

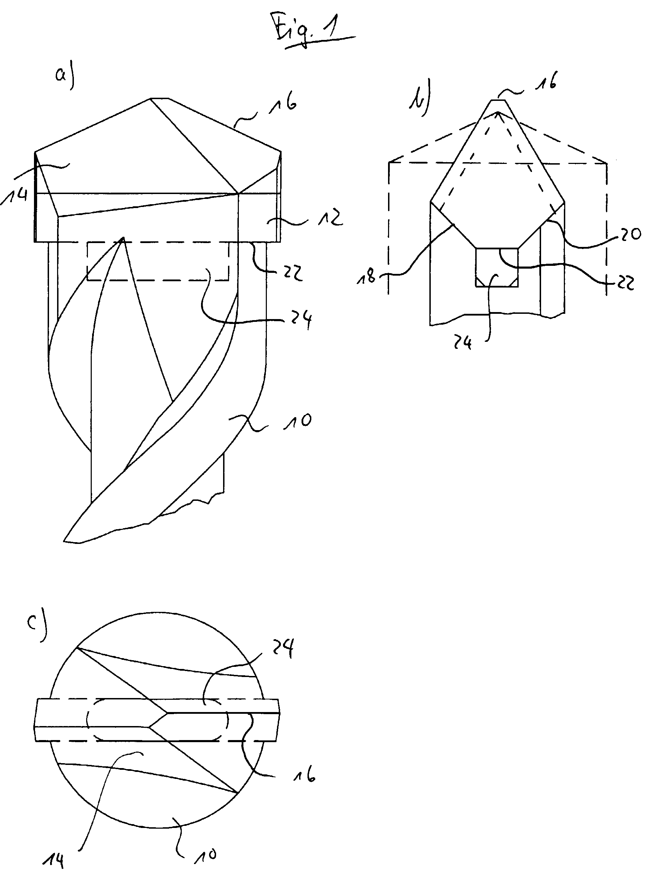

In Figur 1 ist ein erfindungsgemäßes Bohrwerkzeug gemäß einer ersten Ausführungsform gezeigt. Es enthält einen Schaft 10 (hier abgebrochen dargestellt), an den sich ein Abstützabschnitt 12 anschließt. Der Schaft 10 und der Abstützabschnitt 12 können insbesondere einstückig ausgebildet sein.

An dem Abstützabschnitt 12 ist ein Hartmetallteil 14 angeordnet. Das Hartmetallteil 14 bildet zusammen mit dem Abstützabschnitt 12 den Bohrkopf des Bohrwerkzeugs. Das Hartmetallteil 14 weist in einer Richtung parallel zur Mittellängsachse des Bohrwerkzeugs betrachtet etwa denselben Außenumfang auf wie der Abstützabschnitt 12, so daß dieser vor Verschleiß geschützt ist.

Das Hartmetallteil 14 ist auf seiner vom Schaft 10 abgewandten Seite mit einer Schneide 16 und auf der dem Schaft 10 zugewandten Seite mit einem Verbindungsbereich versehen. Der Verbindungsbereich besteht aus zwei Seitenflächen 18, 20 sowie einer Mittelfläche 22. Die Mittelfläche 22 erstreckt sich entlang einem Durchmesser des Bohrkopfes über die gesamte Länge dieses Durchmessers und verläuft senkrecht zur Mittellängsachse des Bohrwerkzeugs. Die beiden Seitenflächen 18, 20 verlaufen schräg zur Mittellängsachse und erstrecken sich ausgehend von den Längsrändern der Mittelfläche 22 zum Außenumfang des Bohrkopfes hin. An der Mittelfläche 22 ist zentriert ein quaderförmiger Fortsatz 24 angebracht, dessen Breite derjenigen der Mittelfläche 22 entspricht und der sich nur über einen Teil der Länge des Durchmessers erstreckt, der die Längsachse der Mittelfläche 22 bildet.

Der Abstützabschnitt 12 ist mit einer Gestaltung versehen, die komplementär zu dem Verbindungsbereich des Hartmetallteils 14 ist. Der Abstützabsehnitt 12 weist also zwei schräg zur Mittellängsachse ausgerichtete Flächen auf, an denen die Seitenflächen 18, 20 des Hartmetallteils 14 in Anlage gelangt, sowie eine senkrecht zur Mittellängsachse ausgerichtete Fläche, an der die Mittelfläche 22 in Anlage gelangt, und schließlich eine langlochartige Aussparung, in die der Fortsatz 24 eingreift.

Diese Gestaltung gewährleistet die perfekte Zentrierung des Hartmetallteils 14 am Abstützabschnitt 12. Ferner wird mittels der relativ großen Flächen 18, 20, 22 sowie der Außenflächen des Fortsatzes 24 gewährleistet, daß das Hartmetallteil 14 durch Verlöten sicher und zuverlässig am Abstützabschnitt 12 befestigt werden kann. Der Abstützabschnitt 12 zusammen mit dem zwischen diesem und dem Hartmetallteil 14 befindlichen Lot stützt das Hartmetallteil 14 gleichmäßig ab, so daß die auftretenden Belastungen ohne Zerstörung des Hartmetallteils aufgenommen werden können.

Das Hartmetallteil 14 ist so ausgebildet, daß im Inneren eine besonders hohe Zähigkeit erzielt ist. An der Oberfläche dagegen wird eine besonders große Härte des Materials erzielt. Die Grenze zwischen zäherem Kern und härterer Oberfläche ist in Figur 1b gestrichelt angedeutet.

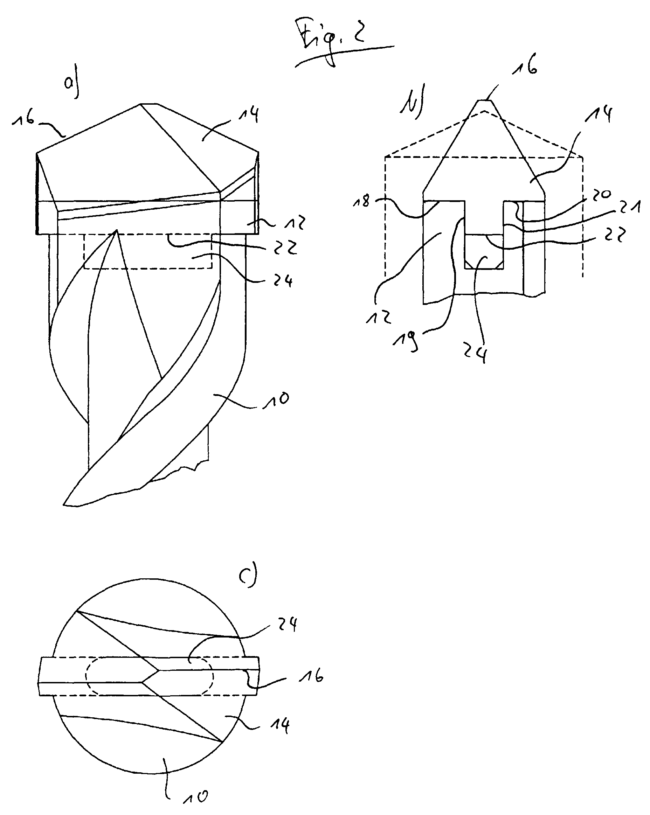

In Figur 2 ist ein erfindungsgemäßes Bohrwerkzeug gemäß einer zweiten Ausführungsform beschrieben. Der Unterschied zur ersten Ausführungsform besteht darin, daß die beiden Seitenflächen 18, 20 in gleicher Weise wie die Mittelfläche 22 senkrecht zur Mittellängsachse des Bohrwerkzeugs ausgerichtet ist. Zwischen der Seitenfläche 18 bzw. 20 und der Mittelfläche 22 erstreckt sich eine Übergangsfläche 19 bzw. 21.

Auch bei dieser Ausführungsform steht ein ausreichend großer Flächenbereich zur Verfügung, mittels dem das Hartmetallteil 14 mit dem Abstützabschnitt 12 verlötet werden kann.

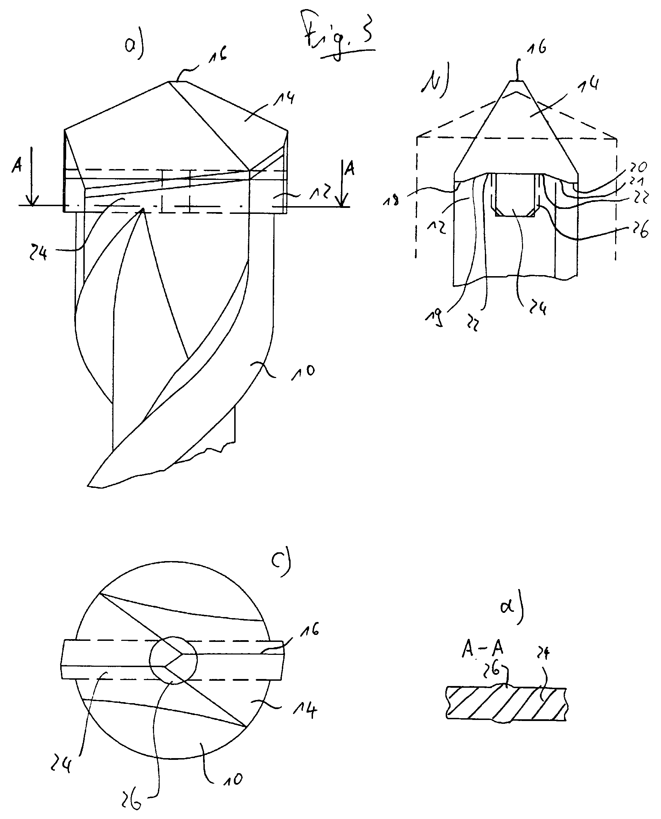

In Figur 3 ist ein erfindungsgemäßes Bohrwerkzeug gemäß einer dritten Ausführungsform der Erfindung gezeigt. Der Unterschied zur Ausführungsform gemäß den Figuren 1 und 2 betrifft die Ausgestaltung des Fortsatzes 24 sowie die Anordnung der Seitenflächen 18, 20 und der Übergangsflächen 19, 21.

Der Fortsatz 24 erstreckt sich bei der Ausführungsform gemäß Figur 3 entlang dem gesamten Durchmesser des Bohrkopfes, entlang dem sich auch die Mittelfläche 22 erstreckt. Der Fortsatz 24 ist mit einer zylindrischen Verdickung 26 versehen, deren Mittelachse mit der Mittellängsachse des Bohrwerkzeugs zusammenfällt. Die Verdickung 26 ist in einer komplementären Aufnahme im Abschnitt 12 aufgenommen und sorgt für die Zentrierung des Hartmetallteils 14 am Abstützabschnitt 12.

Die zum Verbindungsbereich des Hartmetallteils 14 komplementäre Gestaltung des Abstützabschnitts 12 läßt sich bei dieser Ausführungsform besonders einfach herstellen. Anstelle der langlochartigen Aussparung wird hier eine durchgehende Nut verwendet, die mittig mit der erweiterten zylindrischen Aufnahme versehen ist, die beispielsweise gebohrt werden kann.

Im Gegensatz zur Ausführungsform gemäß Figur 2 sind bei der Ausführungsform gemäß Figur 3 die Übergangsflächen 19, 21 schräg zur Mittellängsachse des Bohrwerkzeugs ausgerichtet. Sie verbinden die Seitenflächen mit der Mittelfläche 22, wobei sich die Mittelfläche 22 näher an der Spitze des Bohrwerkzeugs befindet als die Seitenflächen 18, 20. Die schräg verlaufenden Übergangsflächen 19, 21 sorgen für eine genaue Ausrichtung des Hartmetallteils 14 relativ zum Abstützabschnitt 12, während die beiden Seitenflächen 18, 20 sowie die Mittelfläche 22 zu einer besonders hohen Belastbarkeit in der Längsrichtung des Bohrwerkzeugs führen.

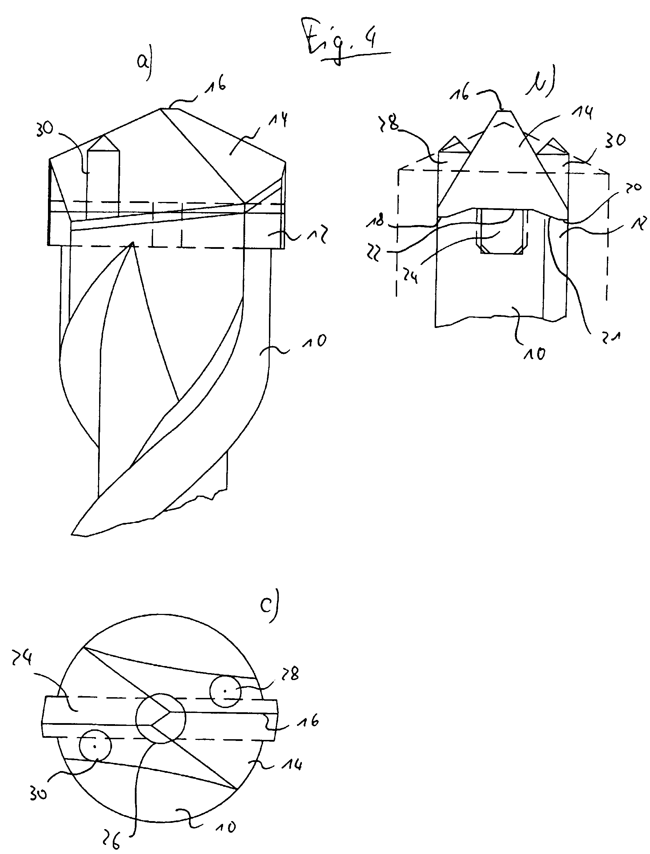

In Figur 4 ist ein erfindungsgemäßes Bohrwerkzeug gemäß einer vierten Ausführungsform gezeigt. Der Unterschied zur dritten Ausführungsform besteht darin, daß am Außenrand des Hartmetallteils 14 zwei Brechbolzen 28, 30 ausgebildet sind. Die Brechbolzen 28, 30 sind einstückig mit dem Hartmetallteil 14 ausgeführt und weisen jeweils eine kegelförmige Spitze auf. Die Brechbolzen dienen zur besseren Zerkleinerung des Bohrguts.

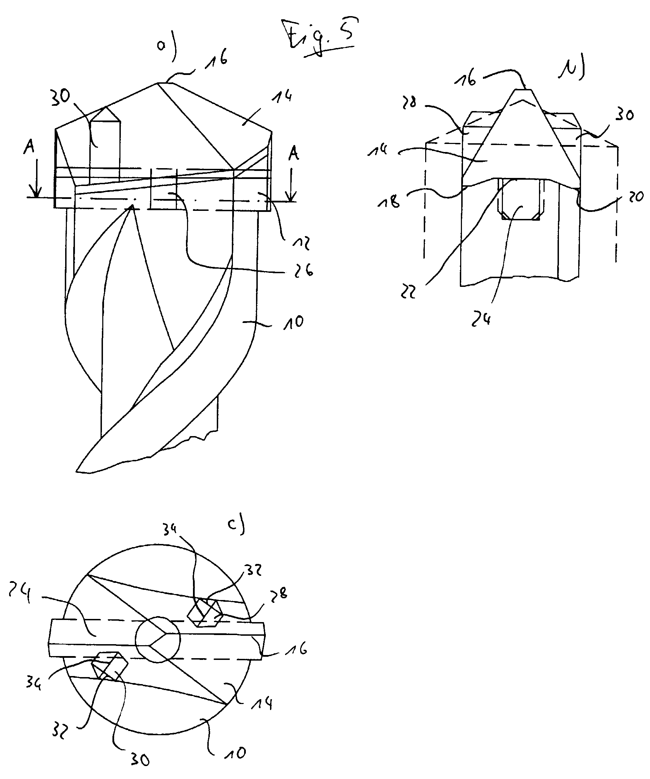

In Figur 5 ist ein erfindungsgemäßes Bohrwerkzeug gemäß einer fünften Ausführungsform gezeigt. Der Unterschied zur vierten Ausführungsform besteht in der Ausgestaltung der Brechbolzen 28, 30. Diese weisen bei der gezeigten Ausführungsform mehrere geradlinige Brechkanten 32, 34 auf, was zur verbesserten Zerkleinerung des Bohrgutes beiträgt.

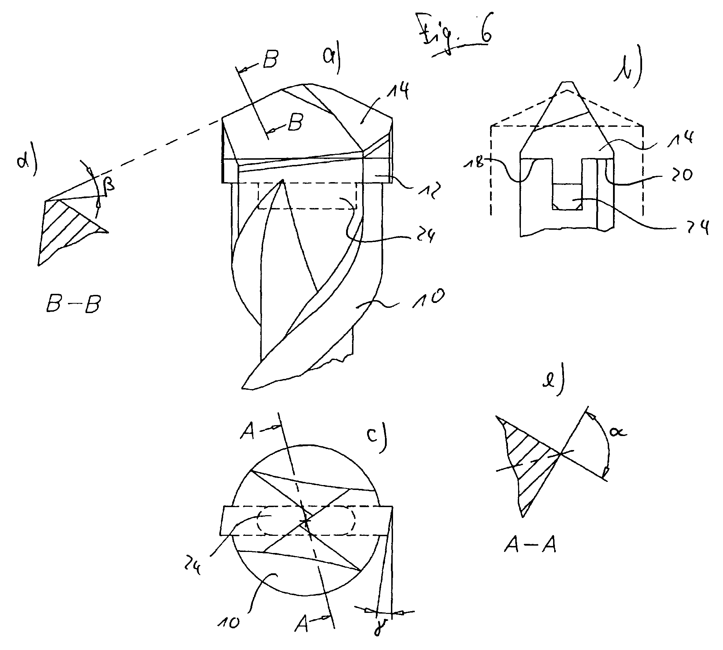

In Figur 6 ist ein erfindungsgemäßes Bohrwerkzeug gemäß einer sechsten Ausführungsform gezeigt. Diese entspricht weitgehend der zweiten Ausführungsform, wobei jedoch Unterschiede hinsichtlich der Ausgestaltung der Hartmetallschneide 16 vorliegen.

Der Winkel α beträgt bei der gezeigten Ausführungsform 90°, und der Winkel β beträgt 20°. Der Winkel γ beträgt 7°.

## Patentansprüche

1. Bohrwerkzeug mit einem Schaft (10) und einem Bohrkopf (12, 14), an dem eine Hartmetallschneide (16) angeordnet ist,
dadurch gekennzeichnet, daß der Bohrkopf aus einem Hartmetallteil (14), welches das vom Schaft abgewandte Ende des Bohrkopfes bildet und an der die Hartmetallschneide (16) geformt ist, und aus einem Abstützabschnitt (12) für das Hartmetallteil (14) besteht, der mit dem Schaft (10) verbunden ist, wobei das Hartmetallteil (14) mit dem Abstützabschnitt (12) verlötet ist.

2. Bohrwerkzeug nach Anspruch 1, dadurch gekennzeichnet, daß das Hartmetallteil einen quaderförmigen Grundkörper und einen sich verjüngenden Spitzenbereich aufweist, wobei die von dem Spitzenbereich abgewandte Seite des Grundkörpers als mit dem Abstützabschnitt (12) verlöteter Verbindungsbereich (18, 19, 20, 21, 22) ausgebildet ist.

3. Bohrwerkzeug nach Anspruch 2, dadurch gekennzeichnet, daß der Verbindungsbereich (18, 19, 20, 21, 22) mit einem quaderförmigen Fortsatz (24) versehen ist, der sich entlang einem Durchmesser des Bohrkopfes (12, 14) erstreckt und in einer komplementären Aufnahme im Abstützabschnitt aufgenommen ist.

4. Bohrwerkzeug nach Anspruch 3, dadurch gekennzeichnet, daß der Fortsatz (24) entlang dem Durchmesser gemessen eine Länge hat, die kleiner ist als der entsprechende Durchmesser.

5. Bohrwerkzeug nach Anspruch 3, dadurch gekennzeichnet, daß der Fortsatz (24) sich entlang dem gesamten entsprechenden Durchmesser erstreckt.

6. Bohrwerkzeug nach einem der Ansprüche 3 bis 5, dadurch gekennzeichnet, daß der Fortsatz (24) in der Mitte eine zylindrische Verdickung (26) aufweist, deren Mittelachse mit der Mittellängsachse des Bohrwerkzeugs zusammenfällt.

7. Bohrwerkzeug nach einem der Ansprüche 2 bis 6, dadurch gekennzeichnet, daß der Verbindungsbereich (18, 19, 20, 21, 22) zwei Seitenflächen (18, 20) und eine zwischen diesen angeordnete Mittelfläche (22) aufweist, die sich senkrecht zur Mittellängsachse des Bohrwerkzeugs erstreckt und an der sich der Fortsatz (24) befindet.

8. Bohrwerkzeug nach Anspruch 7, dadurch gekennzeichnet, daß die beiden Seitenflächen (18, 20) sich ebenfalls senkrecht zur Mittellängsachse des Bohrwerkzeugs erstrecken.

9. Bohrwerkzeug nach Anspruch 7, dadurch gekennzeichnet, daß die beiden Seitenflächen (18, 20) sich schräg zur Mittellängsachse des Bohrwerkzeugs erstrecken.

10. Bohrwerkzeug nach einem der Ansprüche 7 bis 9, dadurch gekennzeichnet, daß zwischen den beiden Seitenflächen (18, 20) und der Mittelfläche (22) jeweils eine Übergangsfläche (19, 21) angeordnet ist, die sich schräg zur Mittellängsachse des Bohrwerkzeugs erstreckt, wobei die Mittelfläche (22) näher an der Spitze des Bohrwerkzeugs angeordnet ist als die beiden Seitenflächen (18, 20).

11. Bohrwerkzeug nach einem der vorhergehenden Ansprüche, dadurch gekennzeichnet, daß das Hartmetallteil (14) in der Nähe seines Außenrandes mit mindestens einem Brechbolzen (28, 30) versehen ist.

12. Bohrwerkzeug nach einem der vorhergehenden Ansprüche, dadurch gekennzeichnet, daß das Hartmetallteil (14) an seiner Oberfläche eine größere Härte aufweist als im Inneren.
